# EUROPEAN PATENT SPECIFICATION

(11) **EP 3 858 128 B1**
(45) Date of publication and mention of the grant of the patent: **04.09.2024**
(21) Application number: 19865310.7
(22) Date of filing: 27.09.2019
(51) Int. Cl.: G05D 1/00, A01D 34/63

(54) **AUTOMATIC MOWER, METHOD AND APPARATUS FOR OPERATING AND CONTROLLING SAME, AND ELECTRONIC DEVICE**
AUTOMATISCHER MÄHER, VERFAHREN UND VORRICHTUNG ZUM BETRIEB UND ZUR STEUERUNG DESSELBEN UND ELEKTRONISCHE VORRICHTUNG
TONDEUSE AUTOMATIQUE, PROCÉDÉ ET APPAREIL POUR LA FAIRE FONCTIONNER ET LA COMMANDER, ET DISPOSITIF ÉLECTRONIQUE

(30) Priority: 27.09.2018 CN 201811132158
(43) Date of publication of application: 04.08.2021
(73) Proprietor: Positec Power Tools (Suzhou) Co., Ltd, Suzhou, Jiangsu 215123 (CN)
(72) Inventor: ZHAO, Fengli, Suzhou, Jiangsu 215123 (CN); ZHA, Yahong, Suzhou, Jiangsu 215123 (CN); JIAO, Shiping, Suzhou, Jiangsu 215123 (CN)
(74) Representative: Kilburn & Strode LLP
(86) International application number: PCT/CN2019/108416
(87) International publication number: WO 2020/063822

(56) References cited:
- EP-A1- 2 547 193
- EP-A1- 3 324 261
- EP-A2- 2 340 701
- EP-B1- 2 547 193
- CN-A- 103 407 491
- CN-A- 105 182 979
- CN-A- 106 717 479
- CN-U- 204 613 789
- CN-U- 205 596 609
- US-A1- 2018 206 402

## Description

### Technical Field

The invention relates to an automatic mower, and in particular, to a method and apparatus for operating and controlling an automatic mower, an automatic mower including the apparatus for operating and controlling same, an electronic device, and a computer readable storage medium.

### BACKGROUND

Automatic mowers can automatically complete tasks such as lawn maintenance, and are increasingly popular with consumers. The automatic mower is restricted to working in a working area enclosed by the boundary. The existing automatic mower is provided with one or more cutter heads at a bottom of a machine body, a metal blade is mounted on the cutter head, and the cutter head rotates to form a cutting area. Since the blade on the cutter head of the mower rotates at a high speed, it may cause injury to people. Therefore, a high level of protection is required. As a result, the blade has a large protection distance and cannot cut the grass near the boundary, that is, the boundary cannot be completely trimmed.

EP 2 547 193 A1 discloses a robotic lawn mower with edge cutting.

EP 2 340 701 A2 discloses an apparatus, method and computer program product for cutting element control.

Therefore, a technical problem of the existing automatic mower is: how to implement the complete trimming of the boundary while ensuring the safety of the mower.

### SUMMARY

In order to overcome the defects of the prior art, a problem to be solved by the present invention is to implement complete trimming of the boundary while ensuring safety of a mower.

A technical solution adopted in the present invention to solve the existing technical problems is as follows:
By the invention, which is set out in the appended set of claims.

Compared with the prior art, the beneficial effects of the present invention are as follows. By controlling, depending on whether a specific object is detected, the working of an automatic mower provided with an auxiliary cutting unit, the complete trimming of the boundary can be achieved while ensuring the safety of the mower.

### BRIEF DESCRIPTION OF THE DRAWINGS

In the following detailed description of embodiments of the present invention with reference to the accompanying drawings, these and/or other aspects and advantages of the present invention become clearer and easier to understand.
FIG. 1 is a schematic diagram of an automatic working system according to an embodiment of the present invention.
FIG. 2 is a schematic structural diagram of an automatic mower according to the first embodiment of the present invention.
FIG. 3 is a schematic diagram of a first arrangement example of a main cutting unit and an auxiliary cutting unit of the automatic mower of the present invention.
FIG. 4 is a schematic diagram of a second arrangement example of the main cutting unit and the auxiliary cutting unit of the automatic mower of the present invention.
FIG. 5 is a schematic diagram of a third arrangement example of the main cutting unit and the auxiliary cutting unit of the automatic mower of the present invention.
FIG. 6 is a schematic flowchart of a method for operating and controlling an automatic mower of the present invention.
FIG. 7 is a schematic diagram of sensor disposing of the automatic mower of the present invention.
FIG. 8 is a schematic block diagram of the apparatus for operating and controlling an automatic mower of the present invention.
FIG. 9 is a schematic block diagram of an electronic device of the present invention.

### DETAILED DESCRIPTION

In the following, the exemplary embodiments of this application are described in detail with reference to the accompanying drawings. Apparently, the described embodiments are merely some but not all of the embodiments of this application. It should be understood that, this application is not limited by the exemplary embodiments described herein.

### Overview of an automatic mower

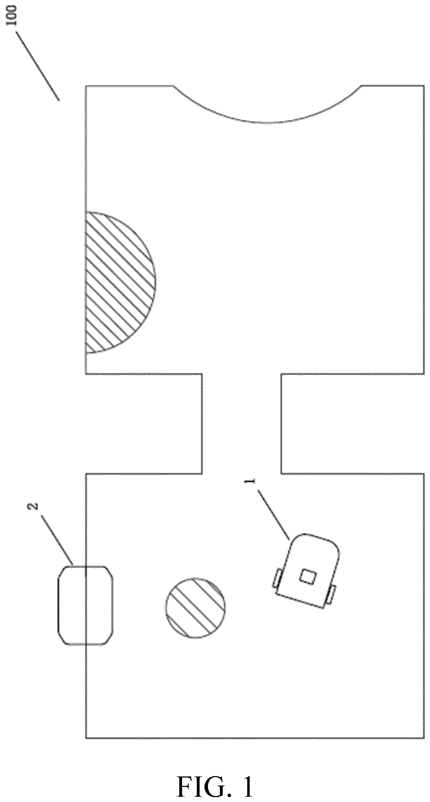

FIG. 1 is a schematic diagram of an automatic working system 100 according to a first embodiment of the present invention. In this embodiment, the automatic working system 100 includes an automatic mower 1. In addition, the above automatic working system 100 further includes a charging station 2 for supplying electric energy to the automatic mower 1.

As shown in FIG. 1, the automatic mower 1 is configured to work in a predetermined working area.

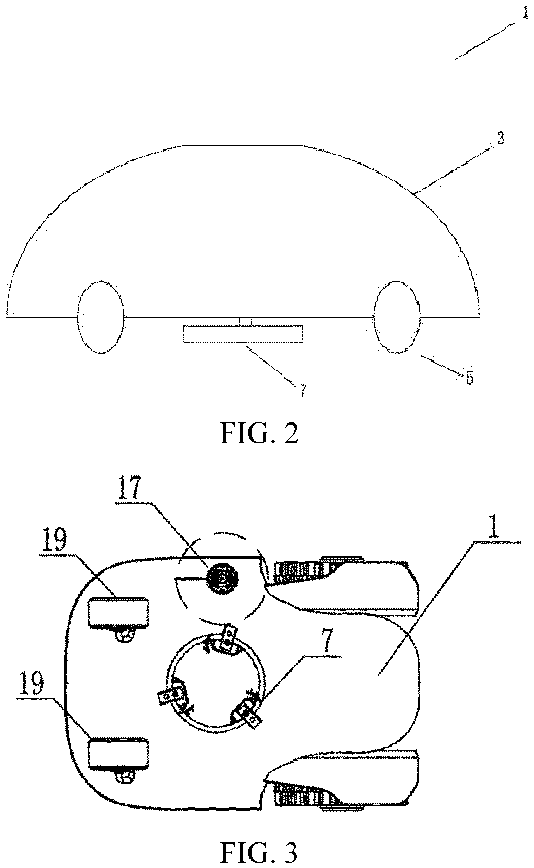

The structure of the automatic mower 1 in this embodiment is shown in FIG. 2. The automatic mower 1 includes a housing 3, a mobile module, a task execution module, an energy module, a control module, and the like. The mobile module includes a wheel set 5 driven by a driving motor to drive the automatic mower 1 to move. The task execution module includes a cutting assembly 7 that performs mowing. The energy module includes a battery pack (not shown in the figure), which provides electric energy for movement and working of the automatic mower 1. The control module is electrically connected to the mobile module, the task execution module, and the energy module to control the mobile module to drive the automatic mower 1 to move and control the task execution module to execute tasks.

### Schematic method for operating and controlling

In order to achieve the purpose of trimming, the automatic mower of the present invention further includes an auxiliary cutting unit for trimming in addition to the main cutting unit in the cutting assembly 7 as shown in FIG. 2. In addition, in order to completely trim the boundary, the auxiliary cutting unit has a cutting range extending at least to be flush with the housing of the automatic mower, for example, the housing 3 shown in FIG. 2.

In an example, the auxiliary cutting unit of the automatic mower of the present invention may be a mowing head that includes a winder, a trimmer line wound around the winder, and a driving motor that drives the winder to rotate. A cutting element of the auxiliary cutting unit may be a flexible material, for example, a trimmer line, or may be a non-cutting metal material. In addition, cutting energy of the auxiliary cutting unit is preferably less than 2 joules. In other embodiments, the auxiliary cutting unit may also be pruning shears, or the like.

When the auxiliary cutting unit is actually disposed, the auxiliary is usually disposed at an edge position of the housing due to use of trimming, and a positional relationship of the auxiliary cutting unit relative to the main cutting unit may have a plurality of examples.

FIG. 3 is a schematic diagram of a first arrangement example of a main cutting unit and an auxiliary cutting unit of the automatic mower of the present invention. As shown in FIG. 3, the main cutting unit 7 is arranged in the middle of the whole machine of the automatic mower, and the auxiliary cutting unit 17 is arranged on a side of the middle of the automatic mower. During cutting, an auxiliary cutting area of the auxiliary cutting unit 17 and a main cutting area of the main cutting unit 7 are tangent or overlap in a width direction of the automatic mower (that is, a direction perpendicular to a walking direction of the automatic mower) to prevent missing cuts. In this embodiment, a universal wheel 19 is provided on a front side of the automatic mower, and in order not to hinder the working of the auxiliary cutting unit, a gap between the cutting area of the auxiliary cutting unit 17 and a movement area of the universal wheel 19 is greater than 5 mm.

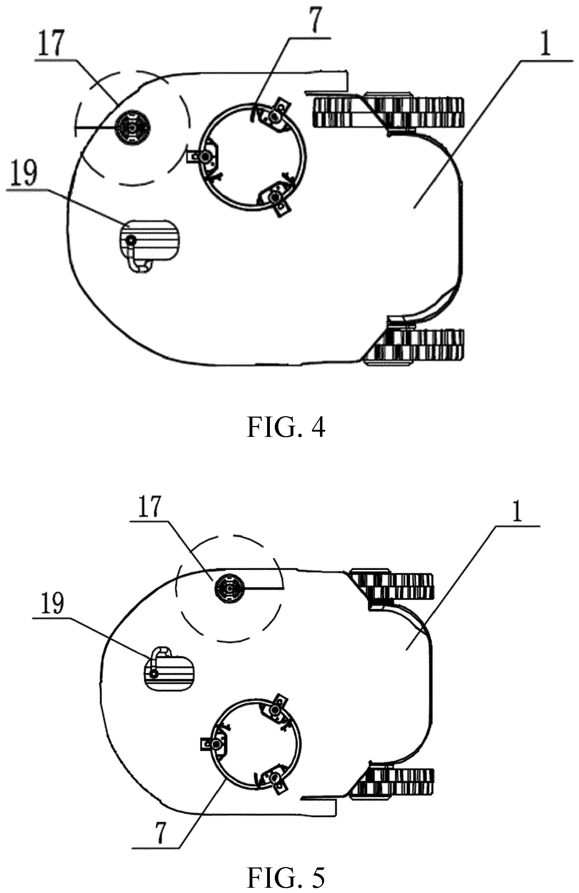

FIG. 4 is a schematic diagram of a second arrangement example of the main cutting unit and the auxiliary cutting unit of the automatic mower of the present invention. As shown in FIG. 4, in this example, the auxiliary cutting unit 17 is arranged on the front end of the automatic mower and on the same side of the main cutting unit 7. Similarly, during cutting, the auxiliary cutting area of the auxiliary cutting unit and the main cutting area of the main cutting unit are tangent or overlap in a width direction of the automatic mower (that is, a direction perpendicular to the walking direction of the automatic mower), and the gap between the cutting area of the auxiliary cutting unit 17 and the movement area of the universal wheel 19 of the automatic mower is greater than 5 mm.

FIG. 5 is a schematic diagram of a third arrangement example of the main cutting unit and the auxiliary cutting unit of the automatic mower of the present invention. As shown in FIG. 5, in this example, the auxiliary cutting unit 17 is arranged on the front end of the automatic mower and on an opposite side of the main cutting unit 7. During cutting, the automatic mower moves clockwise along a boundary of the working area to form a first moving path, and moves counter clockwise along the boundary of the working area to form a second moving path. In a width direction of the automatic mower, the auxiliary cutting area in which the auxiliary cutting unit works when the automatic mower moves along the first moving path is tangent to or overlaps the main cutting area in which the main cutting unit works when the automatic mower moves along the second moving path. In addition, the gap between the cutting area of the auxiliary cutting unit 17 and the movement area of the universal wheel 19 of the automatic mower is greater than 5 mm.

As described above, in the automatic mower of the present invention, although the auxiliary cutting unit is used for trimming, and the cutting energy of the auxiliary cutting unit is preferably limited to avoid causing harm to other objects or the human body, these injuries still cannot be completely avoided, especially for the human body, and it is necessary to completely prevent the auxiliary cutting unit from touching the human body as far as possible. In addition, if the auxiliary cutting unit touches other hard objects during cutting, it may also cause damage to the auxiliary cutting unit itself.

Based on this, the present invention further provides a method for operating and controlling the above automatic mower provided with the auxiliary cutting unit.

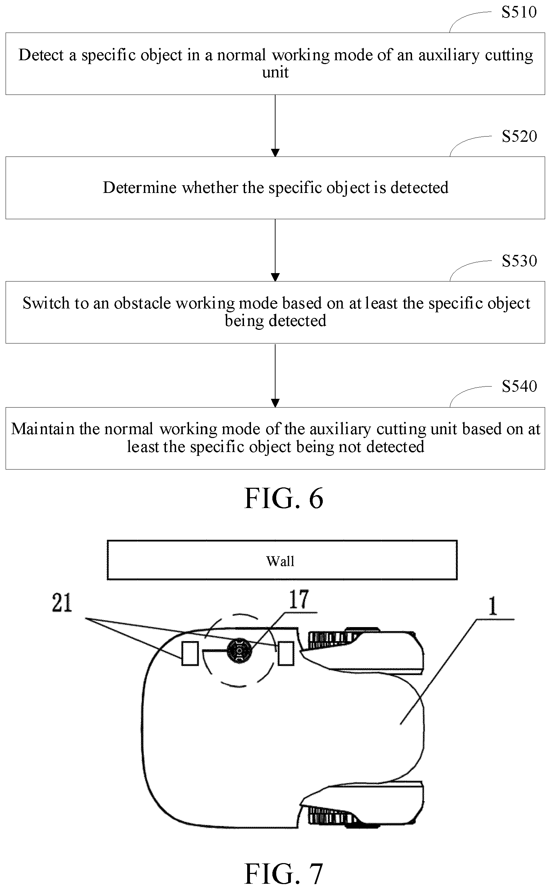

FIG. 6 is a schematic flowchart of a method for operating and controlling an automatic mower of the present invention. As described above, the automatic mower includes a main cutting unit and an auxiliary cutting unit for trimming, and the auxiliary cutting unit has a cutting range extending at least to be flush with a housing of the automatic mower or to exceed the housing.

As shown in FIG. 6, the method for operating and controlling an automatic mower includes: S510: Detect a specific object in a normal working mode of the auxiliary cutting unit; S520: Determine whether the specific object is detected; S530: Switch to an obstacle working mode based on at least the specific object being detected; and S540: Maintain the normal working mode of the auxiliary cutting unit based on at least the specific object being not detected.

In step S510, the detection of the specific object is performed in the normal working mode of the auxiliary cutting unit.

The normal working mode of the auxiliary cutting unit refers to a working mode in which the auxiliary cutting unit normally performs trimming operations. Moreover, since the auxiliary cutting unit has a cutting range extending at least to be flush with the housing of the automatic mower during the trimming operation, it is necessary to detect a specific object, to prevent the auxiliary cutting unit from damaging the specific object or the auxiliary cutting unit from being damaged by the specific object.

In the method for operating and controlling an automatic mower according to the embodiment of the present invention, the specific object may be a living body such as a person or an animal, or other objects that are moving and may affect the working of the automatic mower, for example, objects that move at a speed greater than a predetermined threshold. Those skilled in the art may understand that the term "living body" in the embodiments of the present invention not only refers to living objects, but also refers to other moving objects to be distinguished from fixed obstacles in the working environment of the automatic mower.

In step S520, it is determined whether the specific object is detected. Specifically, in the method for operating and controlling an automatic mower according to the embodiment of this application, the determining whether the specific object is detected includes: determining whether a detected object is a living body; and determining that the specific object is detected in response to the detected object being the living body.

In addition, a distance between the living body and the automatic mower may be further determined in response to the object being the living body, thereby further determining whether the living body interacts with the automatic mower to reduce a misoperation rate of the automatic mower.

In other words, in the method for operating and controlling an automatic mower according to the embodiment of this application, the determining whether the specific object is detected further includes: detecting the distance between the living body and the automatic mower; and the switching to an obstacle working mode based on the specific object being detected includes: switching the normal working mode to the obstacle working mode in response to the distance being less than a preset distance threshold.

In addition, in the method for operating and controlling an automatic mower according to the embodiment of this application, the determining whether the specific object is detected includes: detecting a relative speed between the living body and the automatic mower; and the switching to the obstacle working mode based on at least the specific object being detected includes: switching the normal working mode to the obstacle working mode in response to the relative speed being greater than a preset speed threshold.

In step S530, the normal working mode is switched to the obstacle working mode based on at least the specific object being detected.

In other words, after the specific object that may affect the cutting work of the automatic mower is detected, in consideration of the safety of use of the automatic mower, the working mode of the auxiliary cutting unit needs to be changed. In the method for operating and controlling an automatic mower according the present invention, in the obstacle working mode of the auxiliary cutting unit, the automatic mower performs at least one of: changing a working status of the auxiliary cutting unit; changing a movement mode of the automatic mower; and warning.

Specifically, in order to avoid causing damage to the specific object or avoid causing damage to the auxiliary cutting unit by the specific object, the automatic mower may stop the working of the auxiliary cutting unit or reduce the cutting speed of the auxiliary cutting unit, or lower the cutting energy of the auxiliary cutting unit. In addition, the automatic mower can move through making a turn, avoidance, or the like to avoid damage. In addition, the automatic mower may remind a user of the occurrence of an unforeseen circumstance by giving a warning, for example, transmit an alarm signal on the machine or transmit a warning message to a mobile phone of the user.

In step S540, the normal working mode of the auxiliary cutting unit is maintained based on at least the specific object being not detected. In other words, when the specific object is not detected, the main cutting unit is unlikely to cause damage to an external object or be damaged by the external object, so that the working status of the auxiliary cutting unit can be maintained.

In addition, the method for operating and controlling an automatic mower according to the embodiment of the present invention further includes: detecting the specific object in the obstacle working mode; determining whether the specific object is detected; maintaining the obstacle working mode based on at least the specific object being detected; and resuming the normal working mode of the auxiliary cutting unit based on at least the specific object being not detected.

Stated another way, in the obstacle working mode, it may continue to be detected whether the specific object that affects the working of the auxiliary cutting unit exists. If the specific object still exists, the obstacle working mode is maintained, and if the specific object does not exist, the normal working of the auxiliary cutting unit may be resumed.

Specifically, in the obstacle working mode, the resuming the normal working mode of the auxiliary cutting unit based on at least the specific object being not detected includes: resuming the normal working mode of the auxiliary cutting unit based on at least a working speed of the auxiliary cutting unit being not 0; and/or detecting whether a maintaining time of the obstacle working mode exceeds a preset safety time, and resuming the normal working mode of the auxiliary cutting unit based on at least the maintaining time not exceeding the preset safety time. Specifically, in the obstacle working mode, if the working speed of the auxiliary cutting unit is always less than the preset safety threshold, and the working speed of the auxiliary cutting unit is not zero, then an intelligent mower can automatically resume the normal working of the auxiliary cutting unit when the specific object does not exist. Specifically, the preset safety threshold is a value set according to safety regulations. Specifically, in the obstacle working mode, if the working speed of the auxiliary cutting unit is zero, that is, the auxiliary cutting unit stops working, the existence of the specific object is continuously detected. When the existence of the specific object is not detected, a time period for which the auxiliary cutting unit is in the obstacle working mode is determined. If the time period for which the auxiliary cutting unit is in the obstacle working mode is greater than a set time threshold, the automatic mower can receive an instruction of the user to resume the normal working mode. Specifically, the preset time threshold is set according to the safety regulation. Preferably, the preset time threshold is 10 s. Specifically, that the automatic mower receives the instruction of the user to resume the normal working mode includes: restarting, by the user, the intelligent mower, so that the auxiliary cutting unit is resumed to the normal working mode; or resuming, by the user, the normal working mode of the auxiliary cutting unit through remote operations by using a device such as a mobile phone, an iPad, and the like. Specifically, if the time period for which the auxiliary cutting unit is in the obstacle working mode is less than the preset time threshold, in other words, when the auxiliary cutting unit detects that the specific object is in the obstacle working mode, the auxiliary cutting unit continuously detects the existence of the specific object. When the absence of a specific object is detected, it is determined whether the time period from the time at which the auxiliary cutting unit enters the obstacle working mode to the time at which the absence of the specific object is detected is less than the preset time threshold. When it is determined that the time period is less than the preset time threshold, the auxiliary cutting unit can automatically resume to the normal working mode. Specifically, the preset time threshold is set according to the safety regulation. Preferably, the preset time threshold is 10 s.

In the method for operating and controlling an automatic mower according to the embodiment of the present invention, the detecting the specific object is performed through at least one of: infrared sensing, image identification, ultrasonic/radar ranging, and depth imaging.

For example, by adopting the infrared human body sensing technology, an infrared sensor may be used to identify whether a person is close to the automatic mower, so that the auxiliary cutting unit can be switched from the normal working mode to the obstacle working mode within a certain range of the distance between the person and the machine.

For another example, through the image identification technology, it may be identified whether a person or a part of the human body is close to the automatic mower, and when the person or a part of the human body is within a certain range from the automatic mower, the auxiliary cutting unit is switched from the normal working mode to the obstacle working mode.

According to another example, the ultrasonic/radar ranging technology is used to identify the distance and an approaching speed between a moving object (including a person or an object) and a device. When the moving object is at a certain distance and moves at a certain approach speed, the auxiliary cutting unit is switched from the normal working mode to the obstacle working mode.

According to another example, the depth imaging technology (TOF or other technologies) may be used to perform three-dimensional imaging on the surroundings to identify the human body or the part of the human body. In addition, when it is identified that the person or the part of the human body is close to the machine, and the distance between the person or the part of the human body is within a certain range, the auxiliary cutting unit is switched from the normal working mode to the obstacle working mode.

Certainly, those skilled in the art may understand that the method for operating and controlling an automatic mower according to the embodiment of the present invention may also comprehensively utilize the above two or more technologies to control the working state of the automatic mower by identifying an approaching degree between a person or a moving object and the automatic mower, for example, the approaching distance and the approaching speed.

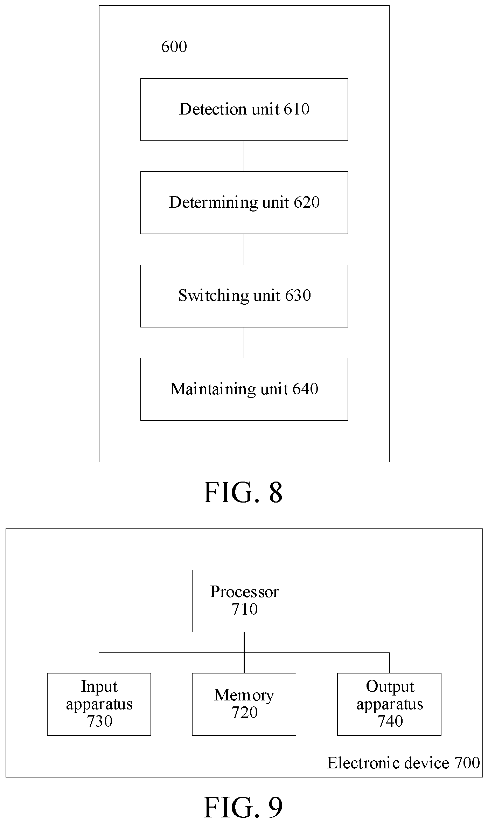

FIG. 7 is a schematic diagram of sensor disposing of the automatic mower of the present invention. As shown in FIG. 7, two or more sensors 21 (for example, the sensor for infrared sensing, image identification, ultrasonic/radar ranging, and depth imaging) may be disposed on a side where the auxiliary cutting unit of the automatic mower is arranged. In addition, as shown in FIG. 8, by disposing a sensor with more than two channels, it may be ensured that the sensor does not miss detection.

Moreover, the automatic mower may be provided with a temperature sensor to be set to switch the working mode of the auxiliary cutting unit when it is detected that the ambient temperature is close to the human body temperature, to prevent erroneous determination.

Furthermore, the automatic mower may be provided with a light sensor to be set to start the auxiliary cutting unit of the automatic mower to normally work after an illuminance is less than a set value, for example, to start the normal working mode at night, to prevent the light from affecting other sensors, such as detection accuracy of the infrared sensor.

Therefore, the method for operating and controlling an automatic mower according to the embodiment of the present invention, further includes: detecting an ambient temperature of the automatic mower; and allowing the auxiliary cutting unit to work in response to the ambient temperature being within a preset temperature range.

In addition, the method for operating and controlling an automatic mower according to the embodiment of the present invention, further includes: detecting an ambient illuminance of the automatic mower; and controlling the auxiliary cutting unit to enter the normal working mode in response to the ambient illuminance being less than an illuminance threshold.

### Schematic automatic mower and apparatus for operating and controlling same

FIG. 8 is a schematic block diagram of the apparatus for operating and controlling an automatic mower of the present invention.

The apparatus 600 for operating and controlling an automatic mower shown in FIG. 8 is applied to the automatic mower having a main cutting unit and an auxiliary cutting unit for trimming as described above, and the auxiliary cutting unit has a cutting range extending at least to be flush with a housing of the automatic mower.

In addition, as shown in FIG. 8, the apparatus 600 for operating and controlling an automatic mower includes: a detection unit 610 configured to detect a specific object in a normal working mode of the auxiliary cutting unit; a determining unit 620 configured to determine whether the specific object is detected; a switching unit 630 configured to switch to an obstacle working mode based on at least the specific object being detected; and a maintaining unit 640 configured to maintain the normal working mode of the auxiliary cutting unit based on at least the specific object being not detected.

In an example, in the above apparatus 600 for operating and controlling an automatic mower, the determining unit 620 is configured to: determine whether a detected object is a living body; and determine that the specific object is detected in response to the detected object being the living body.

In an example, in the above apparatus 600 for operating and controlling an automatic mower, the determining unit 620 is further configured to detect a distance between the living body and the automatic mower; and the switching unit 630 is further configured to switch the normal working mode to the obstacle working mode in response to the distance being less than a preset distance threshold.

In an example, in the above apparatus 600 for operating and controlling an automatic mower, the determining unit 620 is further configured to detect a relative speed between the living body and the automatic mower; and the switching unit 630 is further configured to switch the normal working mode to the obstacle working mode in response to the relative speed being greater than a preset speed threshold.

In an example, in the above apparatus 600 for operating and controlling an automatic mower, in the obstacle working mode, the automatic mower performs at least one of: stopping the working of the auxiliary cutting unit; and changing a movement mode of the automatic mower.

In an example, in the above method 600 for operating and controlling an automatic mower, the detection unit 610 is further configured to detect the specific object in the obstacle working mode; the determining unit 620 is further configured to determine whether the specific object is detected; the maintaining unit 640 is further configured to maintain the obstacle working mode based on at least the specific object being detected; and the switching unit 630 is further configured to resume the normal working mode of the auxiliary cutting unit based on at least the specific object being not detected.

In an example, in the above apparatus 600 for operating and controlling an automatic mower, the detecting the specific obj ect is performed through at least one of infrared sensing, image identification, ultrasonic/radar ranging, and depth imaging.

In an example, in the above apparatus 600 for operating and controlling an automatic mower, the detection unit 610 is further configured to detect an ambient temperature of the automatic mower; and the maintaining unit 640 is further configured to allow the auxiliary cutting unit to work in response to the ambient temperature being within a preset temperature range.

In an example, in the above apparatus 600 for operating and controlling an automatic mower, the detection unit 610 is further configured to detect an ambient illuminance of the automatic mower; and the switching unit 630 is further configured to control the auxiliary cutting unit to enter the normal working mode in response to the ambient illuminance being less than an illuminance threshold.

Those skilled in the art may understand that other details of the apparatus for operating and controlling the automatic mower of the present invention are completely the same as the corresponding details in the previously described method for operating and controlling an automatic mower of the present invention. In order to avoid redundancy, details are not described herein again.

The present invention further relates to an automatic mower, including: a housing; a main cutting unit; an auxiliary cutting unit for trimming, where the auxiliary cutting unit has a cutting range extending at least to be flush with the housing of the automatic mower; and the above apparatus for operating and controlling an automatic mower configured to control a normal working mode or an obstacle working mode of the auxiliary cutting unit.

Compared with the prior art, the beneficial effects of the present invention are as follows. By controlling the working of the automatic mower provided with the auxiliary cutting unit for trimming depending on whether a specific object is detected, the complete trimming of the boundary can be achieved while ensuring the safety of the mower.

### Exemplary electronic device

An electronic device according to the present invention is described below with reference to FIG. 9. The electronic device may be an electronic device integrated in a mobile station of the automatic mower or a stand-alone device independent of the mobile station. The stand-alone device may communicate with the mobile station to implement the method for operating and controlling an automatic mower according to the present invention.

FIG. 9 is a schematic block diagram of an electronic device of the present invention.

As shown in FIG. 9, the electronic device 700 includes one or more processors 710 and a memory 720.

The processor 710 may be a central processing unit (CPU) or another form of processing unit with data processing capabilities and/or instruction execution capabilities, and may control other components in the electronic device 700 to perform desired functions.

The memory 720 may include one or more computer program products, and the computer program products may include various forms of computer-readable storage media, for example, a volatile memory and/or a non-volatile memory. For example, the volatile memory may include a RAM and/or a cache. For example, the non-volatile memory may include a ROM, a hard disk, or a flash memory. One or more computer program instructions may be stored on the computer-readable storage medium, and the processor 710 can run the program instructions to implement the method for operating and controlling the automatic mower of the various embodiments of the present invention described above and/or other desired functions. The computer-readable storage medium may also store various contents such as detection results of specific objects, working mode data, and the like.

In an example, the electronic device 700 may further include: an input apparatus 730 and an output apparatus 740. These components are interconnected by a bus system and/or other forms of connection mechanisms (not shown).

For example, the input apparatus 730 may be configured to receive user inputs.

The output apparatus 740 may directly output various information to the outside, or control the mobile station to transmit signals.

Certainly, for brevity, FIG. 9 merely shows some of the components related to this application in the electronic device 700, and omits the components such as the bus, input/output interfaces, and the like. In addition, the electronic device 700 may also include any other appropriate components according to specific application conditions.

### Exemplary computer program product and computer-readable storage medium

In addition to the above methods and devices, the embodiments of this application may also be computer program products, which include computer program instructions which, when run by a processor, cause the processor to perform the steps in the method for operating and controlling an automatic mower according to various embodiments of the present invention described in the part of the "exemplary method for operating and controlling" in this specification.

The computer program product may use one or more programming languages or a combination thereof to write the program code used for executing the operations of this application. The programming languages include an object-oriented programming language such as Java, C++ and the like, and also include a conventional procedural programming language such as "C" or similar programming languages. The program code may be completely executed on a user computing device, partially executed on a user device, executed as an independent software package, partially executed on a user computing device and partially executed on a remote computing device, or completely executed on a remote computing device or server.

In addition, the embodiment of this application may also be a computer-readable storage medium having stored thereon computer program instructions which, when run by a processor, cause the processor to perform the steps in the method for operating and controlling an automatic mower according to various embodiments of the present invention described in the part of the "exemplary method for operating and controlling" in this specification.

The computer-readable storage medium may use any combination of one or more readable media. The readable medium may be a computer-readable signal medium or a computer-readable storage medium. The readable storage medium may include, for example, but is not limited to, an electric, magnetic, optical, electromagnetic, infrared, or semiconductive system, apparatus, or device, or any combination thereof. More specific examples of the readable storage medium (a non-exhaustive list) include: an electrical connection having one or more wires, a portable disk, a hard disk, a RAM, a ROM, an erasable programmable ROM (EPROM or a flash memory), an optical fiber, a compact disc ROM (CD-ROM), an optical storage device, a magnetic storage device, or any appropriate combination thereof.

The above describes basic principles of this application with reference to specific embodiments. However, it should be noted that the advantages, effects, and the like mentioned in this application are merely examples but not limitations. These advantages, effects, and the like cannot be considered to be necessary for the embodiments of this application. In addition, the specific details disclosed above are only for illustrative purposes and easy-to-understand functions rather than limitation, and the above details do not limit this application for implementation of the above specific details.

The block diagrams of the device, apparatus, equipment, and system involved in this application are merely illustrative examples and are not intended to require or imply that the device, apparatus, equipment, and system need to be connected, arranged, and configured in the manner shown in the block diagrams. Those skilled in the art realize that the device, apparatus, equipment, and system can be connected, arranged, and configured in any manner. Terms such as "include", "comprise", "have", and the like are open terms that mean "including but not limited to" and may be used interchangeably. The terms "or" and "and" used herein refer to the terms "and/or" and may be used interchangeably, unless the context clearly dictates otherwise. The expression "such as" used herein refers to the phrase "such as but not limited to" and may be used interchangeably with "such as".

The above description of the disclosed aspects is provided to enable a person skilled in the art to make or use this application. Various modifications to these aspects are obvious to those skilled in the art, and the general principles defined herein can be applied to other aspects without departing from the scope of this application. Therefore, this application is not intended to be limited to the aspects shown herein but in accordance with the widest scope consistent with the principles and novel features disclosed herein.

The above description has been given for the purposes of illustration and description. In addition, this description is not intended to limit the embodiments of this application to the form disclosed herein. Although a plurality of example aspects and embodiments have been discussed above, those skilled in the art realize some variations, modifications, changes, additions, and sub-combinations thereof.

## Claims

1. A method for operating and controlling an automatic mower, wherein the automatic mower comprises a main cutting unit (7) and an auxiliary cutting unit (17) for trimming, and the auxiliary cutting unit (17) has a cutting range extending at least to be flush with a housing of the automatic mower, and wherein the method comprises:
detecting (S510) a specific object in a normal working mode of the auxiliary cutting unit
(17); determining (S520) whether the specific object is detected;
switching (S530) to an obstacle working mode based on at least the specific object being detected; and
maintaining (S540) the normal working mode of the auxiliary cutting unit (17) based on at least the specific object being not detected; wherein
the normal working mode of the auxiliary cutting unit (17) refers to a working mode in which the auxiliary cutting unit (17) normally performs trimming operations; and
in the obstacle working mode of the auxiliary cutting unit (17), the automatic mower performs at least one of: changing a working status of the auxiliary cutting unit (17); changing a movement mode of the automatic mower; and warning,
wherein the determining whether the specific object is detected comprises:
determining whether the detected object is a living body; and
determining that the specific object is detected in response to the detected object being the living body,
wherein the changing a working state of the auxiliary cutting unit (17) comprises at least one of:
controlling the auxiliary cutting unit (17) to stop working; and
reducing a working speed of the auxiliary cutting unit (17)
further comprising:
detecting the specific object in the obstacle working mode;
determining whether the specific object is detected;
maintaining the obstacle working mode based on at least the specific object being detected; and
resuming the normal working mode of the auxiliary cutting unit (17) based on at least the specific object being not detected,
wherein the resuming the normal working mode of the auxiliary cutting unit (17) based on at least the specific object being not detected comprises:
detecting whether a maintaining time of the obstacle working mode exceeds a preset safety time, and resuming the normal working mode of the auxiliary cutting unit (17) based on at least the maintaining time not exceeding the preset safety time.

2. The method for operating and controlling an automatic mower according to claim 1, wherein
the determining whether the specific object is detected further comprises:
detecting a distance between the living body and the automatic mower; and
the switching to an obstacle working mode based on at least the specific object being detected comprises:
switching the normal working mode to the obstacle working mode in response to the distance being less than a preset distance threshold.

3. The method for operating and controlling an automatic mower according to claim 1, wherein
the determining whether the specific object is detected comprises:
detecting a relative speed between the living body and the automatic mower; and
the switching to an obstacle working mode based on at least the specific object being detected comprises:
switching the normal working mode to the obstacle working mode in response to the relative speed being greater than a preset speed threshold.

4. The method for operating and controlling an automatic mower according to claim 1, wherein the changing a movement mode of the automatic mower comprises at least one of:
controlling the automatic mower to stop moving;
controlling the automatic mower to move back to keep away from the specific object; and
controlling the automatic mower to make a turn to keep away from the specific object.

5. The method for operating and controlling an automatic mower according to claim 1, wherein the resuming the normal working mode of the auxiliary cutting unit (17) based on at least the specific object being not detected comprises:
resuming the normal working mode of the auxiliary cutting unit (17) based on at least a working speed of the auxiliary cutting unit (17) being not 0.

6. The method for operating and controlling an automatic mower according to claim 1, wherein the detecting the specific object is performed through at least one of: infrared sensing, image identification, ultrasonic/radar ranging, and depth imaging.

7. The method for operating and controlling an automatic mower according to claim 1, further comprising:
detecting an ambient temperature of the automatic mower; and
allowing the auxiliary cutting unit (17) to work in response to the ambient temperature being within a preset temperature range.

8. The method for operating and controlling an automatic mower according to claim 1, further comprising:
detecting an ambient illuminance of the automatic mower; and
controlling the auxiliary cutting unit (17) to enter the normal working mode in response to the ambient illuminance being less than an illuminance threshold.

9. An apparatus (600) for operating and controlling an automatic mower, wherein the automatic mower comprises a main cutting unit (7) and an auxiliary cutting unit (17) for trimming, and the auxiliary cutting unit(17) has a cutting range extending at least to be flush with a housing of the automatic mower, and wherein the apparatus (600) comprises:
a detection unit configured to detect a specific object in a normal working mode of the auxiliary cutting unit (17);
a determining unit configured to determine whether the specific object is detected;
a switching unit configured to switch to an obstacle working mode based on at least the specific object being detected; and
a maintaining unit configured to maintain the normal working mode of the auxiliary cutting unit (17) based on at least the specific object being not detected; wherein
the normal working mode of the auxiliary cutting unit (17) refers to a working mode in which the auxiliary cutting unit (17) is configured to normally perform trimming operations; and
in the obstacle working mode of the auxiliary cutting unit (17), the automatic mower is configured to perform at least one of: changing a working status of the auxiliary cutting unit (17); changing a movement mode of the automatic mower; and warning, wherein the determining unit is configured to:
determine whether the detected object is a living body; and
determine that the specific object is detected in response to the detected object being the living body, wherein the changing a working state of the auxiliary cutting unit (17) comprises at least one of:
controlling the auxiliary cutting unit (17) to stop working; and
reducing a working speed of the auxiliary cutting unit (17), wherein
the detection unit is further configured to detect the specific object in the obstacle working mode;
the determining unit is further configured to determine whether the specific object is detected;
the maintaining unit is further configured to maintain the obstacle working mode based on at least the specific object being detected; and
the switching unit is further configured to resume the normal working mode of the auxiliary cutting unit (17) based on at least the specific object being not detected, wherein the resuming the normal working mode of the auxiliary cutting unit (17) based on at least the specific object being not detected comprises:
detecting whether a maintaining time of the obstacle working mode exceeds a preset safety time, and resuming the normal working mode of the auxiliary cutting unit (17) based on at least the maintaining time not exceeding the preset safety time.

10. The apparatus (600) for operating and controlling an automatic mower according to claim 9, wherein
the determining unit is further configured to detect a distance between the living body and the automatic mower; and
the switching unit is further configured to switch the normal working mode to the obstacle working mode in response to the distance being less than a preset distance threshold.

11. The apparatus (600) for operating and controlling an automatic mower according to claim 9, wherein
the determining unit is further configured to detect a relative speed between the living body and the automatic mower; and
the switching unit is further configured to switch the normal working mode to the obstacle working mode in response to the relative speed being greater than a preset speed threshold.

12. The apparatus (600) for operating and controlling an automatic mower according to claim 10, wherein the changing a movement mode of the automatic mower comprises at least one of:
controlling the automatic mower to stop moving;
controlling the automatic mower to move back to keep away from the specific object; and
controlling the automatic mower to make a turn to keep away from the specific object.

13. The apparatus (600) for operating and controlling an automatic mower according to claim 9, wherein the resuming the normal working mode of the auxiliary cutting unit (17) based on at least the specific object being not detected comprises:
resuming the normal working mode of the auxiliary cutting unit (17) based on at least a working speed of the auxiliary cutting unit (17) being not 0.

14. The apparatus (600) for operating and controlling an automatic mower according to claim 9, wherein the detecting the specific object is performed through at least one of: infrared sensing, image identification, ultrasonic/radar ranging, and depth imaging.

15. The apparatus (600) for operating and controlling an automatic mower according to claim 9, wherein
the detection unit is further configured to detect an ambient temperature of the automatic mower; and
the maintaining unit is further configured to allow the auxiliary cutting unit (17) to work in response to the ambient temperature being within a preset temperature range.

16. The apparatus (600) for operating and controlling an automatic mower according to claim 9, wherein
the detection unit is further configured to detect an ambient illuminance of the automatic mower; and
the switching unit is further configured to, control the auxiliary cutting unit (17) to enter the normal working mode in response to the ambient illuminance being less than an illuminance threshold.

17. An automatic mower, comprising:
a housing;
a main cutting unit (7);
an auxiliary cutting unit (17), wherein the auxiliary cutting unit (17) has a cutting range extending at least to be flush with the housing of the automatic mower; and
the apparatus (600) for operating and controlling an automatic mower according to any of claims 9 to 16 configured to control the normal working mode or the obstacle working mode of the auxiliary cutting unit (17).

18. An electronic device (700), comprising:
a memory (720) configured to store computer executable instructions; and
a processor (710) configured to execute the computer executable instructions stored in the memory to perform the method for operating and controlling an automatic mower according to any of claims 1 to 8.

19. A computer readable storage medium, having stored thereon computer program instructions which, when executed by a computing apparatus, are operable to perform the method for operating and controlling an automatic mower according to any of claims 1 to 8.

## Patentansprüche

1. Verfahren zum Betreiben und Steuern eines automatischen Mähers, wobei der automatische Mäher ein Hauptschneidwerk (7) und ein Hilfsschneidwerk (17) zum Trimmen umfasst, und das Hilfsschneidwerk (17) einen Schneidbereich aufweist, der sich mindestens so weit erstreckt, dass er mit einem Gehäuse des automatischen Mähers bündig ist, und wobei das Verfahren umfasst:
Erfassen (S510) eines spezifischen Objekts in einem normalen Arbeitsmodus des Hilfsschneidwerks (17);
Bestimmen (S520), ob das spezifische Objekt erfasst wird; Umschalten (S530) in einen Hindernisarbeitsmodus basierend mindestens darauf, dass das spezifische Objekt erfasst wird; und
Aufrechterhalten (S540) des normalen Arbeitsmodus des Hilfsschneidwerks (17) basierend mindestens darauf, dass das spezifische Objekt nicht erfasst wird; wobei der normale Arbeitsmodus des Hilfsschneidwerks (17) sich auf einen Arbeitsmodus bezieht, in dem das Hilfsschneidwerk (17) normalerweise Trimmvorgänge durchführt; und
im Hindernisarbeitsmodus des Hilfsschneidwerks (17) der automatische Mäher mindestens eines ausführt von: Ändern eines Arbeitszustands des Hilfsschneidwerks (17); Ändern eines Bewegungsmodus des automatischen Mähers; und Warnen,
wobei das Bestimmen, ob das spezifische Objekt erfasst wird, Folgendes umfasst:
Bestimmen, ob das erfasste Objekt ein Lebewesen ist; und als Reaktion darauf, dass das erfasste Objekt ein Lebewesen ist, Bestimmen, dass das spezifische Objekt erfasst wird,
wobei das Ändern eines Arbeitszustands des Hilfsschneidwerks (17) mindestens eines umfasst von:
Steuern des Hilfsschneidwerks (17), den Arbeitsbetrieb anzuhalten; und
Verringern der Arbeitsgeschwindigkeit des Hilfsschneidwerks (17)
ferner umfassend:
Erfassen des spezifischen Objekts im Hindernisarbeitsmodus;
Bestimmen, ob das spezifische Objekt erfasst wird;
Beibehalten des Hindernisarbeitsmodus basierend mindestens darauf, dass das spezifische Objekt erfasst wird; und
Wiederaufnehmen des normalen Arbeitsmodus des Hilfsschneidwerks (17) basierend mindestens darauf, dass das spezifische Objekt nicht erfasst wird,
wobei das Wiederaufnehmen des normalen Arbeitsmodus des Hilfsschneidwerks (17) basierend mindestens darauf, dass das spezifische Objekt nicht erfasst wird, umfasst:
Erfassen, ob eine Beibehaltungszeit des Hindernisarbeitsmodus eine voreingestellte Sicherheitszeit überschreitet, und Wiederaufnehmen des normalen Arbeitsmodus des Hilfsschneidwerks (17) basierend mindestens darauf, dass die Beibehaltungszeit die voreingestellte Sicherheitszeit nicht überschreitet.

2. Verfahren zum Betreiben und Steuern eines automatischen Mähers nach Anspruch 1, wobei das Bestimmen, ob das spezifische Objekt erfasst wird, ferner umfasst:
Erfassen einer Entfernung zwischen dem Lebewesen und dem automatischen Mäher; und
das Umschalten in einen Hindernisarbeitsmodus basierend mindestens darauf, dass das spezifische Objekt erfasst wird, umfasst:
Umschalten des normalen Arbeitsmodus in den Hindernisarbeitsmodus als Reaktion darauf, dass die Entfernung kleiner als ein vorbestimmter Entfernungsschwellenwert ist.

3. Verfahren zum Betreiben und Steuern eines automatischen Mähers nach Anspruch 1, wobei das Bestimmen, ob das spezifische Objekt erfasst wird, Folgendes umfasst:
Erfassen einer Relativgeschwindigkeit zwischen dem Lebewesen und dem automatischen Mäher; und
das Umschalten in einen Hindernisarbeitsmodus basierend mindestens darauf, dass das spezifische Objekt erfasst wird, umfasst:
Umschalten des normalen Arbeitsmodus in den Hindernisarbeitsmodus als Reaktion darauf, dass die Relativgeschwindigkeit höher als ein vorbestimmter Geschwindigkeitsschwellenwert ist.

4. Verfahren zum Betreiben und Steuern eines automatischen Mähers nach Anspruch 1, wobei das Ändern eines Bewegungsmodus des automatischen Mähers mindestens eines umfasst von:
Steuern des automatischen Mähers, die Bewegung anzuhalten;
Steuern des automatischen Mähers, zurückzufahren, um sich von dem spezifischen Objekt fernzuhalten; und
Steuern des automatischen Mähers, eine Wendung zu machen, um sich von dem speziellen Objekt fernzuhalten.

5. Verfahren zum Betreiben und Steuern eines automatischen Mähers nach Anspruch 1, wobei das Wiederaufnehmen des normalen Betriebsmodus des Hilfsschneidwerks (17) basierend mindestens darauf, dass das spezifische Objekt nicht erfasst wird, umfasst:
Wiederaufnehmen des normalen Arbeitsmodus des Hilfsschneidwerks (17) basierend mindestens darauf, dass eine Arbeitsgeschwindigkeit des Hilfsschneidwerks (17) nicht 0 ist.

6. Verfahren zum Betreiben und Steuern eines automatischen Mähers nach Anspruch 1, wobei das Erfassen des spezifischen Objekts durch mindestens eines erfolgt von: Infrarotabtastung, Bilderkennung, Ultraschall-/Radarentfernungsmessung und Tiefenbildgebung.

7. Verfahren zum Betreiben und Steuern eines automatischen Mähers nach Anspruch 1, ferner umfassend:
Erfassen einer Umgebungstemperatur des automatischen Mähers; und
Ermöglichen, dass das Hilfsschneidwerk (17) als Reaktion darauf arbeitet, dass die Umgebungstemperatur innerhalb eines voreingestellten Temperaturbereichs liegt.

8. Verfahren zum Betreiben und Steuern eines automatischen Mähers nach Anspruch 1, ferner umfassend:
Erfassen einer Umgebungshelligkeit des automatischen Mähers; und
Steuern des Hilfsschneidwerks (17), in den normalen Arbeitsmodus einzutreten, als Reaktion darauf, dass die Umgebungshelligkeit einen Helligkeitsschwellenwert unterschreitet.

9. Vorrichtung (600) zum Betreiben und Steuern eines automatischen Mähers, wobei der automatische Mäher ein Hauptschneidwerk (7) und ein Hilfsschneidwerk (17) zum Trimmen umfasst, und das Hilfsschneidwerk (17) einen Schneidbereich aufweist, der sich mindestens so weit erstreckt, dass er mit einem Gehäuse des automatischen Mähers bündig ist, und wobei die Vorrichtung (600) umfasst:
eine Erfassungseinheit, die dazu ausgelegt ist, ein spezifisches Objekt in einem normalen Arbeitsmodus des Hilfsschneidwerks (17) zu erfassen;
eine Bestimmungseinheit, die dazu ausgelegt ist, zu bestimmen, ob das spezifische Objekt erfasst wird;
eine Umschalteinheit, die dazu ausgelegt ist, basierend mindestens darauf, dass das spezifische Objekt erfasst wird, in einen Hindernisarbeitsmodus umzuschalten; und
eine Beibehaltungseinheit, die dazu ausgelegt ist, den normalen Arbeitsmodus des Hilfsschneidwerks (17) basierend mindestens darauf beizubehalten, dass das spezifische Objekt nicht erfasst wird; wobei der normale Arbeitsmodus des Hilfsschneidwerks (17) sich auf einen Arbeitsmodus bezieht, in dem das Hilfsschneidwerk (17) dazu ausgelegt ist, normalerweise Trimmvorgänge durchzuführen; und
im Hindernisarbeitsmodus des Hilfsschneidwerks (17) der automatische Mäher dazu ausgelegt ist, mindestens eines auszuführen von: Ändern eines Arbeitszustands des Hilfsschneidwerks (17); Ändern eines Bewegungsmodus des automatischen Mähers; und Warnen, wobei die Bestimmungseinheit dazu ausgelegt ist:
zu bestimmen, ob das erfasste Objekt ein Lebewesen ist; und
zu bestimmen, dass das spezifische Objekt als Reaktion darauf erfasst wird, dass das erfasste Objekt ein Lebewesen ist, wobei das Ändern eines Arbeitszustands des Hilfsschneidwerks (17) mindestens eines umfasst von:
Steuern des Hilfsschneidwerks (17), den Arbeitsbetrieb anzuhalten; und
Verringern der Arbeitsgeschwindigkeit des Hilfsschneidwerks (17), wobei
die Erfassungseinheit ferner dazu ausgelegt ist, das spezifische Objekt im Hindernisarbeitsmodus zu erfassen;
die Bestimmungseinheit ferner dazu ausgelegt ist, zu bestimmen, ob das spezifische Objekt erfasst wird;
die Beibehaltungseinheit ferner dazu ausgelegt ist, den Hindernisarbeitsmodus basierend mindestens darauf beizubehalten, dass das spezifische Objekt erfasst wird; und
die Umschalteinheit ferner dazu ausgelegt ist, den normalen Arbeitsmodus des Hilfsschneidwerks (17) basierend mindestens darauf wiederaufzunehmen, dass das spezifische Objekt nicht erfasst wird, wobei das Wiederaufnehmen des normalen Arbeitsmodus des Hilfsschneidwerks (17) basierend mindestens darauf, dass das spezifische Objekt nicht erfasst wird, Folgendes umfasst:
Erfassen, ob eine Beibehaltungszeit des Hindernisarbeitsmodus eine voreingestellte Sicherheitszeit überschreitet, und Wiederaufnehmen des normalen Arbeitsmodus des Hilfsschneidwerks (17) basierend mindestens darauf, dass die Beibehaltungszeit die voreingestellte Sicherheitszeit nicht überschreitet.

10. Vorrichtung (600) zum Betreiben und Steuern eines automatischen Mähers nach Anspruch 9, wobei
die Bestimmungseinheit ferner dazu ausgelegt ist, eine Entfernung zwischen dem Lebewesen und dem automatischen Mäher zu erfassen; und
die Umschalteinheit ferner dazu ausgelegt ist, als Reaktion darauf, dass die Entfernung kleiner als ein vorbestimmter Entfernungsschwellenwert ist, den normalen Arbeitsmodus in den Hindernisarbeitsmodus umzuschalten.

11. Vorrichtung (600) zum Betreiben und Steuern eines automatischen Mähers nach Anspruch 9, wobei
die Bestimmungseinheit ferner dazu ausgelegt ist, eine Relativgeschwindigkeit zwischen dem Lebewesen und dem automatischen Mäher zu erfassen; und
die Umschalteinheit ferner dazu ausgelegt ist, als Reaktion darauf, dass die Relativgeschwindigkeit höher als ein vorbestimmter Geschwindigkeitsschwellenwert ist, den normalen Arbeitsmodus in den Hindernisarbeitsmodus umzuschalten.

12. Vorrichtung (600) zum Betreiben und Steuern eines automatischen Mähers nach Anspruch 10, wobei das Ändern eines Bewegungsmodus des automatischen Mähers mindestens eines umfasst von:
Steuern des automatischen Mähers, die Bewegung anzuhalten;
Steuern des automatischen Mähers, zurückzufahren, um sich von dem spezifischen Objekt fernzuhalten; und
Steuern des automatischen Mähers, eine Wendung zu machen, um sich von dem speziellen Objekt fernzuhalten.

13. Vorrichtung (600) zum Betreiben und Steuern eines automatischen Mähers nach Anspruch 9, wobei das Wiederaufnehmen des normalen Betriebsmodus des Hilfsschneidwerks (17) basierend mindestens darauf, dass das spezifische Objekt nicht erfasst wird, umfasst: Wiederaufnehmen des normalen Arbeitsmodus des Hilfsschneidwerks (17) basierend mindestens darauf, dass eine Arbeitsgeschwindigkeit des Hilfsschneidwerks (17) nicht 0 ist.

14. Vorrichtung (600) zum Betreiben und Steuern eines automatischen Mähers nach Anspruch 9, wobei das Erfassen des spezifischen Objekts durch mindestens eines erfolgt von: Infrarotabtastung, Bilderkennung, Ultraschall-/Radarentfernungsmessung und Tiefenbildgebung.

15. Vorrichtung (600) zum Betreiben und Steuern eines automatischen Mähers nach Anspruch 9, wobei
die Erfassungseinheit ferner dazu ausgelegt ist, eine Umgebungstemperatur des automatischen Mähers zu erfassen; und
die Beibehaltungseinheit ferner dazu ausgelegt ist, als Reaktion darauf, dass die Umgebungstemperatur innerhalb eines voreingestellten Temperaturbereichs liegt, zu ermöglichen, dass das Hilfsschneidwerk (17) arbeitet.

16. Vorrichtung (600) zum Betreiben und Steuern eines automatischen Mähers nach Anspruch 9, wobei
die Erfassungseinheit ferner dazu ausgelegt ist, eine Umgebungshelligkeit des automatischen Mähers zu erfassen; und
die Umschalteinheit ferner dazu ausgelegt ist, als Reaktion darauf, dass die Umgebungshelligkeit einen Helligkeitsschwellenwert unterschreitet, das Hilfsschneidwerk (17) zu steuern, in den normalen Arbeitsmodus einzutreten.

17. Automatischer Mäher, umfassend:
ein Gehäuse;
ein Hauptschneidwerk (7);
ein Hilfsschneidwerk (17), wobei das Hilfsschneidwerk (17) einen Schneidbereich aufweist, der mindestens so weit reicht, dass dieser mit dem Gehäuse des automatischen Mähers bündig ist; und
die Vorrichtung (600) zum Betreiben und Steuern eines automatischen Mähers nach einem der Ansprüche 9 bis 16 dazu ausgelegt ist, den normalen Arbeitsmodus oder den Hindernisarbeitsmodus des Hilfsschneidwerks (17) zu steuern.

18. Elektronische Vorrichtung (700), umfassend:
einen Speicher (720) der zum Speichern von computerausführbaren Anweisungen ausgelegt ist; und
einen Prozessor (710), der dazu ausgelegt ist, die im Speicher gespeicherten computerausführbaren Anweisungen auszuführen, um das Verfahren zum Betreiben und Steuern eines automatischen Mähers nach einem der Ansprüche 1 bis 8 durchzuführen.

19. Computerlesbares Speichermedium, das darauf gespeicherte Computerprogrammanweisungen aufweist, die beim Ausführen durch eine Rechenvorrichtung betreibbar sind, um das Verfahren zum Betreiben und Steuern eines automatischen Mähers nach einem der Ansprüche 1 bis 8 durchzuführen.

## Revendications

1. Procédé d'exploitation et de commande d'une tondeuse automatique, la tondeuse automatique comprenant une unité principale (7) de coupe et une unité auxiliaire (17) de coupe servant au taillage, et l'unité auxiliaire (17) de coupe présentant une plage de coupe s'étendant au moins jusqu'à l'aplomb d'un boîtier de la tondeuse automatique, et le procédé comprenant :
la détection (S510) d'un objet spécifique dans un mode de fonctionnement normal de l'unité auxiliaire (17) de coupe ;
le fait de déterminer (S520) si l'objet spécifique est détecté ;
le passage (S530) à un mode de fonctionnement en présence d'obstacle sur la base d'au moins la détection de l'objet spécifique ; et
le maintien (S540) du mode de fonctionnement normal de l'unité auxiliaire (17) de coupe sur la base d'au moins la non-détection de l'objet spécifique ;
le mode de fonctionnement normal de l'unité auxiliaire (17) de coupe désignant un mode de fonctionnement dans lequel l'unité auxiliaire (17) de coupe effectue normalement des opérations de taillage ; et
dans le mode de fonctionnement en présence d'obstacle de l'unité auxiliaire (17) de coupe, la tondeuse automatique effectuant au moins une action parmi celles de : changer un état de fonctionnement de l'unité auxiliaire (17) de coupe ; changer un mode de déplacement de la tondeuse automatique ; et avertir,
le fait de déterminer si l'objet spécifique est détecté comprenant :
le fait de déterminer si l'objet détecté est un corps vivant ; et
le fait de déterminer que l'objet spécifique est détecté en réaction au fait que l'objet détecté soit le corps vivant,
le changement d'un état de fonctionnement de l'unité auxiliaire (17) de coupe comprenant au moins une action parmi celles de :
commander l'unité auxiliaire (17) de coupe pour qu'elle arrête de fonctionner ; et
réduire une vitesse de travail de l'unité auxiliaire (17) de coupe,
ce qui comprend en outre :
la détection de l'objet spécifique dans le mode de fonctionnement en présence d'obstacle ;
le fait de déterminer si l'objet spécifique est détecté ;
le maintien du mode de fonctionnement en présence d'obstacle sur la base d'au moins la détection de l'objet spécifique ; et
la reprise du mode de fonctionnement normal de l'unité auxiliaire (17) de coupe sur la base d'au moins la non-détection de l'objet spécifique,
la reprise du mode de fonctionnement normal de l'unité auxiliaire (17) de coupe sur la base d'au moins la non-détection de l'objet spécifique comprenant :
le fait de détecter si un temps de maintien du mode de fonctionnement en présence d'obstacle dépasse un temps de sûreté prédéfini, et la reprise du mode de fonctionnement normal de l'unité auxiliaire (17) de coupe sur la base d'au moins le fait que le temps de maintien ne dépasse pas le temps de sûreté prédéfini.

2. Procédé d'exploitation et de commande d'une tondeuse automatique selon la revendication 1,
le fait de déterminer si l'objet spécifique est détecté comprenant en outre :
la détection d'une distance entre le corps vivant et la tondeuse automatique ; et
le passage à un mode de fonctionnement en présence d'obstacle sur la base d'au moins la détection de l'objet spécifique comprenant :
le passage du mode de fonctionnement normal au mode de fonctionnement en présence d'obstacle en réaction au fait que la distance soit inférieure à un seuil de distance prédéfini.

3. Procédé d'exploitation et de commande d'une tondeuse automatique selon la revendication 1,
le fait de déterminer si l'objet spécifique est détecté comprenant :
la détection d'une vitesse relative entre le corps vivant et la tondeuse automatique ; et
le passage à un mode de fonctionnement en présence d'obstacle sur la base d'au moins la détection de l'objet spécifique comprenant :
le passage du mode de fonctionnement normal au mode de fonctionnement en présence d'obstacle en réaction au fait que la vitesse relative soit supérieure à un seuil de vitesse prédéfini.

4. Procédé d'exploitation et de commande d'une tondeuse automatique selon la revendication 1, le changement d'un mode de déplacement de la tondeuse automatique comprenant au moins une action parmi celles de :
commander la tondeuse automatique pour qu'elle arrête de se déplacer ;
commander la tondeuse automatique pour qu'elle recule afin de rester à l'écart de l'objet spécifique ; et
commander la tondeuse automatique pour qu'elle effectue un virage afin de rester à l'écart de l'objet spécifique.

5. Procédé d'exploitation et de commande d'une tondeuse automatique selon la revendication 1, la reprise du mode de fonctionnement normal de l'unité auxiliaire (17) de coupe sur la base d'au moins la non-détection de l'objet spécifique comprenant :
la reprise du mode de fonctionnement normal de l'unité auxiliaire (17) de coupe sur la base d'au moins le fait qu'une vitesse de travail de l'unité auxiliaire (17) de coupe ne soit pas 0.

6. Procédé d'exploitation et de commande d'une tondeuse automatique selon la revendication 1, la détection de l'objet spécifique étant effectuée par au moins une méthode parmi : une détection infrarouge, une identification d'image, une télémétrie par ultrasons/radar et une imagerie de relief.

7. Procédé d'exploitation et de commande d'une tondeuse automatique selon la revendication 1, comprenant en outre :
la détection d'une température ambiante de la tondeuse automatique ; et
le fait de permettre à l'unité auxiliaire (17) de coupe de fonctionner en réaction au fait que la température ambiante se trouve à l'intérieur d'une plage de température prédéfinie.

8. Procédé d'exploitation et de commande d'une tondeuse automatique selon la revendication 1, comprenant en outre :
la détection d'un éclairement ambiant de la tondeuse automatique ; et
la commande de l'unité auxiliaire (17) de coupe pour entrer dans le mode de fonctionnement normal en réaction au fait que l'éclairement ambiant soit inférieur à un seuil d'éclairement.

9. Appareil (600) d'exploitation et de commande d'une tondeuse automatique, la tondeuse automatique comprenant une unité principale (7) de coupe et une unité auxiliaire (17) de coupe servant au taillage, et l'unité auxiliaire (17) de coupe présentant une plage de coupe s'étendant au moins jusqu'à l'aplomb d'un boîtier de la tondeuse automatique, et l'appareil (600) comprenant :
une unité de détection configurée pour détecter un objet spécifique dans un mode de fonctionnement normal de l'unité auxiliaire (17) de coupe ;
une unité de détermination configurée pour déterminer si l'objet spécifique est détecté ;
une unité de commutation configurée pour passer à un mode de fonctionnement en présence d'obstacle sur la base d'au moins la détection de l'objet spécifique ; et
une unité de maintien configurée pour maintenir le mode de fonctionnement normal de l'unité auxiliaire (17) de coupe sur la base d'au moins la non-détection de l'objet spécifique ;
le mode de fonctionnement normal de l'unité auxiliaire (17) de coupe désignant un mode de fonctionnement dans lequel l'unité auxiliaire (17) de coupe est configurée pour effectuer normalement des opérations de taillage ; et
dans le mode de fonctionnement en présence d'obstacle de l'unité auxiliaire (17) de coupe, la tondeuse automatique étant configurée pour effectuer au moins une action parmi celles de : changer un état de fonctionnement de l'unité auxiliaire (17) de coupe ; changer un mode de déplacement de la tondeuse automatique ; et avertir, l'unité de détermination étant configurée pour :
déterminer si l'objet détecté est un corps vivant ; et
déterminer que l'objet spécifique est détecté en réaction au fait que l'objet détecté soit le corps vivant, le changement d'un état de fonctionnement de l'unité auxiliaire (17) de coupe comprenant au moins une action parmi celles de :
commander l'unité auxiliaire (17) de coupe pour qu'elle arrête de fonctionner ; et
réduire une vitesse de travail de l'unité auxiliaire (17) de coupe,
l'unité de détection étant en outre configurée pour détecter l'objet spécifique dans le mode de fonctionnement en présence d'obstacle ;
l'unité de détermination étant en outre configurée pour déterminer si l'objet spécifique est détecté ;
l'unité de maintien étant en outre configurée pour maintenir le mode de fonctionnement en présence d'obstacle sur la base d'au moins la détection de l'objet spécifique ; et
l'unité de commutation étant en outre configurée pour reprendre le mode de fonctionnement normal de l'unité auxiliaire (17) de coupe sur la base d'au moins la non-détection de l'objet spécifique, la reprise du mode de fonctionnement normal de l'unité auxiliaire (17) de coupe sur la base d'au moins la non-détection de l'objet spécifique comprenant :
le fait de détecter si un temps de maintien du mode de fonctionnement en présence d'obstacle dépasse un temps de sûreté prédéfini, et la reprise du mode de fonctionnement normal de l'unité auxiliaire (17) de coupe sur la base d'au moins le fait que le temps de maintien ne dépasse pas le temps de sûreté prédéfini.

10. Appareil (600) d'exploitation et de commande d'une tondeuse automatique selon la revendication 9,
l'unité de détermination étant en outre configurée pour détecter une distance entre le corps vivant et la tondeuse automatique ; et
l'unité de commutation étant en outre configurée pour passer du mode de fonctionnement normal au mode de fonctionnement en présence d'obstacle en réaction au fait que la distance soit inférieure à un seuil de distance prédéfini.

11. Appareil (600) d'exploitation et de commande d'une tondeuse automatique selon la revendication 9,
l'unité de détermination étant en outre configurée pour détecter une vitesse relative entre le corps vivant et la tondeuse automatique ; et
l'unité de commutation étant en outre configurée pour passer du mode de fonctionnement normal au mode de fonctionnement en présence d'obstacle en réaction au fait que la vitesse relative soit supérieure à un seuil de vitesse prédéfini.

12. Appareil (600) d'exploitation et de commande d'une tondeuse automatique selon la revendication 10, le changement d'un mode de déplacement de la tondeuse automatique comprenant au moins une action parmi celles de :
commander la tondeuse automatique pour qu'elle arrête de se déplacer ;
commander la tondeuse automatique pour qu'elle recule afin de rester à l'écart de l'objet spécifique ; et
commander la tondeuse automatique pour qu'elle effectue un virage afin de rester à l'écart de l'objet spécifique.

13. Appareil (600) d'exploitation et de commande d'une tondeuse automatique selon la revendication 9, la reprise du mode de fonctionnement normal de l'unité auxiliaire (17) de coupe sur la base d'au moins la non-détection de l'objet spécifique comprenant :
la reprise du mode de fonctionnement normal de l'unité auxiliaire (17) de coupe sur la base d'au moins le fait qu'une vitesse de travail de l'unité auxiliaire (17) de coupe ne soit pas 0.

14. Appareil (600) d'exploitation et de commande d'une tondeuse automatique selon la revendication 9, la détection de l'objet spécifique étant effectuée par au moins une méthode parmi: une détection infrarouge, une identification d'image, une télémétrie par ultrasons/radar et une imagerie de relief.

15. Appareil (600) d'exploitation et de commande d'une tondeuse automatique selon la revendication 9,
l'unité de détection étant en outre configurée pour détecter une température ambiante de la tondeuse automatique ; et
l'unité de maintien étant en outre configurée pour permettre à l'unité auxiliaire (17) de coupe de fonctionner en réaction au fait que la température ambiante se trouve à l'intérieur d'une plage de température prédéfinie.

16. Appareil (600) d'exploitation et de commande d'une tondeuse automatique selon la revendication 9,
l'unité de détection étant en outre configurée pour détecter un éclairement ambiant de la tondeuse automatique ; et
l'unité de commutation étant en outre configurée pour commander l'unité auxiliaire (17) de coupe pour entrer dans le mode de fonctionnement normal en réaction au fait que l'éclairement ambiant soit inférieur à un seuil d'éclairement.

17. Tondeuse automatique, comprenant :
un boîtier ;
une unité principale (7) de coupe ;
une unité auxiliaire (17) de coupe, l'unité auxiliaire (17) de coupe présentant une plage de coupe s'étendant au moins jusqu'à l'aplomb du boîtier de la tondeuse automatique ; et
l'appareil (600) d'exploitation et de commande d'une tondeuse automatique selon l'une quelconque des revendications 9 à 16, configuré pour commander le mode de fonctionnement normal ou le mode de fonctionnement en présence d'obstacle de l'unité auxiliaire (17) de coupe.

18. Dispositif électronique (700), comprenant :
une mémoire (720) configurée pour stocker des instructions exécutables par ordinateur ; et
un processeur (710) configuré pour exécuter les instructions exécutables par ordinateur stockées dans la mémoire afin de réaliser le procédé d'exploitation et de commande d'une tondeuse automatique selon l'une quelconque des revendications 1 à 8.

19. Support de stockage lisible par ordinateur, sur lequel sont stockées des instructions de programme d'ordinateur qui, lorsqu'elles sont exécutées par un appareil informatique, sont exploitables pour réaliser le procédé d'exploitation et de commande d'une tondeuse automatique selon l'une quelconque des revendications 1 à 8.
